# EUROPEAN PATENT SPECIFICATION

(11) **EP 1 594 737 B1**
(45) Date of publication and mention of the grant of the patent: **11.04.2007**
(21) Application number: 04707336.6
(22) Date of filing: 02.02.2004
(51) Int. Cl.: B64D 11/00

(54) **MODULE FOR PLACEMENT IN A PASSENGER CABIN OF A MEANS OF TRANSPORT, MORE PARTICULARLY AN AIRPLANE**
MODUL ZUR ANORDNUNG IN EINER PASSAGIERKABINE EINES TRANSPORTMITTELS, INSBESONDERE EINES FLUGZEUGS
MODULE A PLACER DANS UNE CABINE DE PASSAGERS D'UN MOYEN DE TRANSPORT, PLUS SPECIFIQUEMENT D'UN AERONEF

(30) Priority: 04.02.2003 NL 1022580
(43) Date of publication of application: 16.11.2005
(73) Proprietor: Skohold B.V., 3511 LX Utrecht (NL)
(72) Inventor: ZWAAN, Johanna, Sophia, Margaretha, NL-3734 BH Den Dolder (NL)
(74) Representative: Winckels, Johannes Hubertus F.
(86) International application number: PCT/NL2004/000071
(87) International publication number: WO 2004/069657

(56) References cited:
- EP-A- 0 035 955
- EP-A- 1 106 502
- DE-C- 3 917 206
- FR-A- 1 002 271
- US-A- 4 185 799
- US-A- 5 024 398
- US-A- 5 784 836

## Description

The invention relates to a module for placement in a passenger cabin of a means of transport, more particularly an airplane, which passenger cabin is provided with seats in transverse and longitudinal rows, wherein the transverse rows are cut through, in longitudinal direction, by at least one aisle, which module is provided with walls extending upwardly from a bottom of the passenger cabin and with an access in the form of a closable door connected with an aisle, wherein the module is at least provided with two transverse walls which are connected in upward direction with a ceiling of the passenger cabin and can be attached transversely to the longitudinal rows by means suitable for this purpose.

Such a module is known from US-A-4, 185,799, which shows all the features of the preamble of independent claim 1. Here, a transverse wall is provided with an attachment system with locking means cooperating with the rails on which the passenger seats are fixed. The fixing construction is designed such-that distortions in the airplane do not result in jamming of the door. Thus, a seamless connection which is good-looking in appearance can be realized on the bottom of the passenger cabin. Side and top connections of the transverse wall are evidently to be realized by adjusting the form of the transverse wall to the design of the passenger cabin.

Further, from US-A-5,024,398, a module is known which has the form of a unit equipped as a one-man office space provided with a desk top, a seat, a telephone, a computer link or the like. The unit is provided with walls connected with the floor, which, at their top side, remain clear of the ceiling, while a wall or wall part has been left out to form an access, which may, for instance, be closed with a curtain. Because the space in an airplane is limited, the unit is designed such that, taking into account the elbow and leg room needed when sitting behind a desk, as little floor surface as possible is taken up. For this purpose, the unit has, for instance, a hexagonal design in cross section. A row of such units can be successively arranged centrally in the passenger cabin by leaving out, in longitudinal direction, seats normally present there. Because each unit needs to be individually accessible, no more than two cells can be placed next to each other. Particularly with wider airplanes, this leads to limitations with regard to optimal placement, that is, the most efficient possible surface utilization. Further, the units can only be used for the intended purpose, an office workplace; in other words, when no use is made of the office facilities, there will only be a seat taking up relatively much space.

Further, from EP-A-0 035 955, a module is known in the form of a container, which can be slid into the cargo hold of an airplane and is equipped as a sleeping cabin. The purpose is that the container is arranged connectedly with the passenger cabin and is accessible from there: Such a container, which takes up extra-space because the persons using the sleeping facilities are, at least during landing and takeoff, in a seat in the passenger cabin, may, for instance, be used when less cargo needs to be transported than space allows. A similar unit is known from US-A-4,458,864, where this unit is equipped as a mobile medical treatment room, which, for easy introduction into and removal out of a cargo hold of an airplane, can be provided with a ceiling movable in height direction. Such a unit needs to be able to be used both inside and-outside the cargo hold of the airplane, which sets constructive requirements for both the ceiling and the bottom of the unit, and thus, in turn, has consequences for the weight of the whole unit. This weight is less important when the unit is placed in the cargo hold, yet it would be a clear-drawback if placement in a passenger cabin were intended, where the weight of the unit should preferably not be higher than the weight of the seats removed for allowing the placement thereof.

The invention contemplates a module of the type described in the opening paragraph which forms an enclosed space, can be equipped as playing and/or sleeping accommodation, makes optimum use of the limited floor surface and is relatively lightweight.

This is achived according to the invention with the features of the independent claim 1.

According to the invention, when, for connecting with the ceiling and/or the sidewalls, the walls are provided with deformable means and the at least two transverse walls can be arranged at a mutual distance substantially corresponding to a dimension which is taken up, in the direction of a longitudinal row, by the seats to be given up for placing the module in the passenger cabin. Thus, with a minimum of facilities which are, in addition, to have a light design, a playing and/or sleeping accommodation closed off from the rest of the passenger cabin can be created, whose floor surface can be maximized by having the transverse walls connect as closely as possible with the other elements present in the passenger cabin, such as seats, while this maximum floor surface stripped from seats can be optimally utilized due to the room-like form of the module. By means of the deformable means, the space bounded by the walls can, without any problems, rapidly and conveniently be sealingly connected with sidewalls and ceiling. In addition, this can effect a sound insulation, so that, when equipped as playing and/or sleeping accommodation, noises from the module and to the module are deadened. A further advantage of a thus designed module is that, because of these deformable means, it can be used in several airplane types which are mutually not entirely equally dimensioned.

The deformable means are preferably accommodated in a recess provided in a top or side edge of the respective wall. The deformable means are preferably resilient, where an option to be considered are, for instance, deformable means comprising an inflatable hose.

Here, the desired closed room can be obtained when the transverse walls are connected, on both sides, with in each case one side wall of the passenger cabin and at least one of the transverse walls contains a door connected with an aisle. Thus, these transverse walls extend over the whole cross section of the passenger cabin and the door provides access to the closable module. The floor surface then available in the module then partly takes up the surface of the aisle or the aisles. Depending on the type of airplane, this may be less desired, for instance when the space behind the module needs to remain accessible, because toilets or a pantry are located there. It is true that a passage could be created with a second door, but this is considered less desirable when the module is intended as playing and/or sleeping accommodation. In such cases, according to a further embodiment of the invention, it may be preferred that the transverse walls are connected, on one side, with a sidewall of the passenger cabin and, on the other side, are connected with a longitudinal wall, which is adjacent to the aisle and extends from the bottom to the ceiling of the passenger cabin. In: this embodiment, the aisle remains wholly available to the crew and the passengers in the passenger cabin. If, with wide airplanes with two aisles, they both need to remain passable without entering the module, this can be realized according to a further embodiment of the invention, when the transverse walls are connected, on both sides, with in each case one longitudinal wall, which is adjacent to the aisle and extends from the bottom to the ceiling of the passenger cabin. When a longitudinal wall extending parallel and adjacent to the aisle is used, a door providing access to the module can be present in this longitudinal wall. If two aisles are present and one aisle comes to an end at the module, it is preferred to provide a door there, because this door can then be provided so as to open inwards into the passenger cabin without becoming inconvenient. A door arranged parallel and adjacent to an aisle is preferably designed as a sliding door or swing panel door.

When the transverse walls extend over the whole cross section of the passenger cabin, the depth dimension of the module can simply be changed by placing the transverse walls further apart or, conversely, closer together. In order to obtain a same flexibility with a module with longitudinal wall(s), it can be preferred, in such an embodiment, that a longitudinal wall is assembled from at least two elements each having a width corresponding to a dimension which is taken up, in the direction of a longitudinal row, by one seat or a plurality of seats in a part of the passenger cabin where the module is to be placed.

A module designed for a particular type of airplane can also qualify for placement in a different type of airplane. In that different type of airplane, the dimension which is taken up, in the direction of a longitudinal row, by one seat or a plurality of seats may differ from that of the type of airplane referred to first. This could result in unused or lost space. In order to prevent this, according to a further embodiment of the invention, it is proposed that a longitudinal wall is assembled from at least two elements, at least one of which has a dimension which can be set and adjusted in width direction.

In order to be able to install a module according to the invention in a passenger cabin in a rapid and convenient manner, it is further preferred that a transverse wall is assembled from at least two elements.

In order to be able to equip the module for the intended purpose in a convenient and rapid manner, according to a further embodiment of the invention, it can be provided that at least one wall of the module is provided with supporting and bearing facilities for leisure facilities, such as a foldable sofa bed, a table top, a console, a washbasin, a climbing pole, a storage facility, a play structure, etc. Also, with a thus designed module, the requirement that, at least during takeoff and landing, no loose objects or elements are present can be met in a relatively simple manner.

In particular when the module is used as a playing cabin for children, it is preferred that a wall and/or the door is provided with a window, so that the parents traveling with them can observe their children without needing to enter the module. In such a use of the module, it is also preferred that the door is provided with a childproof latch and/or that the floor is provided with a non-slip covering.

Because an airplane may make sudden movements, it is further preferred that at least one of the transverse and/or longitudinal walls is, on the sides of the walls facing each other, at least partly provided with a resilient and/or sound-insulating wall or covering material.

It is known that playing children can produce quite a lot of noise, which can be rather disturbing to adult travelers. A module designed as a separate playing cabin offers a solution to this problem, especially when, according to a further embodiment of the invention, at least one of the transverse and/or longitudinal walls has a sandwich structure with a sound-insulating inner layer. Incidentally, this embodiment is also advantageous when the module is used as sleeping accommodation.

With reference to embodiments diagrammatically shown in the drawing, albeit exclusively by way of non-limiting examples, the module according to the invention will now be further-elucidated, in which drawing:
Fig. 1 shows a plan of a first embodiment;
Fig. 2 shows an elevational view of the embodiment according to Fig. 1;
Fig. 3 shows a plan of a second embodiment; and
Fig. 4 shows an elevational view of the embodiment according to Fig. 3.

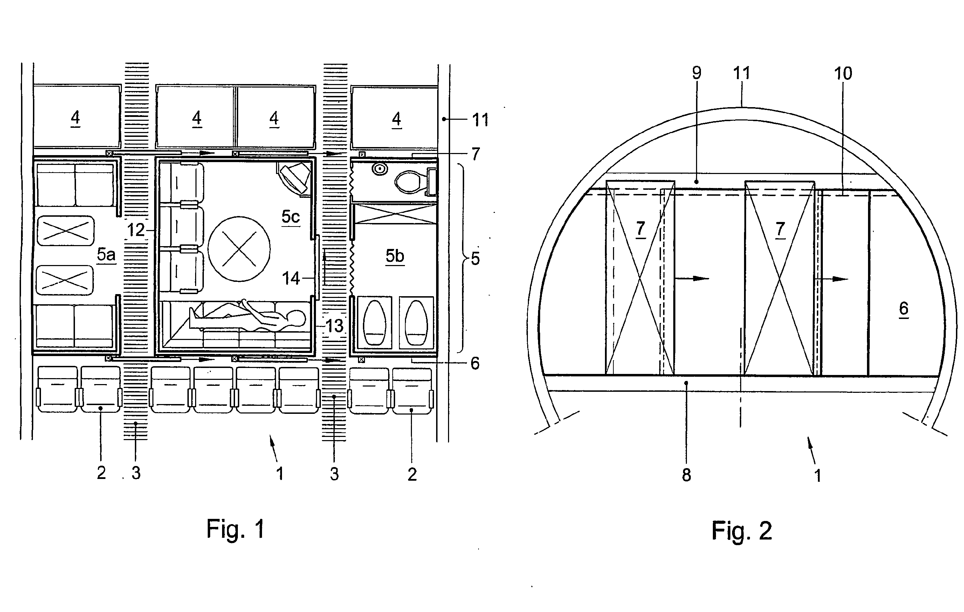

In Fig. 1, a part of a plan of a passenger cabin 1 of an airplane is shown, in which the seating is formed by seats 2 placed in transverse and longitudinal rows, while there are aisles 3 between the transverse rows, in the direction of the longitudinal rows. Further, there are a number of toilets 4 present. Connected with the toilets 4, a module 5 has been placed. For the purpose of being able to place the module 5, a number of transverse rows of seats 2 have been removed. The module 5 is formed by a transverse wall 6 and a transverse wall 7, which are each provided with two sliding doors 7 at the location where the aisles 3 extend through the module. The transverse walls 6 and 7 extend from a floor 8 of the passenger compartment 1 to a ceiling 9 thereof. At the connection with the ceiling 9, the transverse walls 6 and 7 are provided with a recess in which an inflatable hose 10 has been provided. The transverse walls are sealingly fixed to the floor 8 and further to the ceiling 9 and/or walls 11 of the airplane. The inflatable hose 10, which may further also extend between the transverse walls 6 and 7 and the airplane wall 11, ensures a fitting connection and sealing of the module with respect to the passenger cabin 1.

The module 5, which is primarily intended as playing and sleeping room for children, is traversed by two aisles 3. Crew members and passengers walking over the aisles may be experienced as disturbing. For this reason, the module 5 is subdivided. Thus, a part 5a can be distinguished, in which seats and play areas for somewhat older children are arranged, that is, children who may be expected not to need constant supervision. Leaving out the sliding doors 7 at the location of part 5a could allow a direct view of these children. Further, a part 5b is present, which may be equipped for accommodation and care of babies, while, also, a children's toilet may be provided therein. The largest part of the module 5 is taken up by a part 5c, which is closed off from the aisles 3 by means of longitudinal walls 12 and 13, while an access in the form of a sliding door 14 has been provided in the longitudinal wall 13.

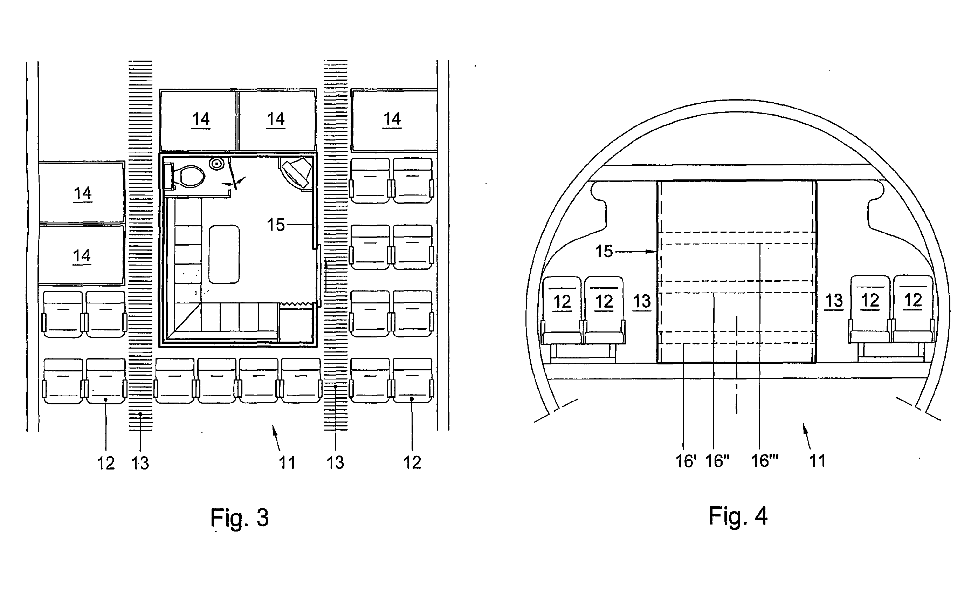

In the part 5c, play facilities for children may be accommodated, such as tables, sofas, climbing poles, a drinking fountain, cupboards for playthings, etc. The seating parts of the sofas may also be used as beds. By making the back parts of the sofas foldable, these sofas may also be used as beds, while, thereabove, further facilities which are downwardly foldable for forming beds may be present, as diagrammatically designated in Fig. 4 by 16', 16" and 16"'. It is noted that these bed facilities may, if desired, also be intended for adult passengers, for instance when no or too few children are present on the flight to make efficient use of the module as a play facility.

Fig. 3 shows a part of the plan of a passenger cabin 11, in which only in a part between the aisles 13, a module 15 has been placed, so that, next to the module 15, seats 12 or toilets 14 can be present.

It goes without saying that, within the scope of the invention as set forth in the appended claims, many more modifications and variants are possible. When the module is located at an end of the passenger cabin and ends there, for instance in a closed transverse partition, then the sliding doors in the respective transverse wall or even the whole transverse wall can be left out. Also, a module may extend over a central part, one aisle and a side part of the passenger cabin, while the longitudinal wall along the aisle not covered by the module does not need to have a door, but the transverse wall is provided with a door at the location where the other aisle comes to an end at this transverse wall. Further, for airplanes with a very wide middle part, the module could be smaller than this middle part, with seats having been placed directly connected with a longitudinal wall of the module.

## Claims

1. A module (5) for placement in a passenger cabin (1) of a means of transport, more particularly an airplane, which passenger cabin (1) is provided with seats (2) in transverse and longitudinal rows, wherein the transverse rows are cut through, in longitudinal direction, by at least one aisle (3), which module (5) is provided with walls adapted to extend upwardly from a bottom of the passenger cabin (1) and with an access in the form of a closable door (7) connectable with an aisle (3), wherein the module (5) is at least provided with two transverse walls (6,7) which are connectable in upward direction with a ceiling (9) of the passenger cabin (1) and can be attached transversely to the longitudinal rows by means suitable for this purpose, wherein for connecting with the ceiling (9) and/or the sidewalls, the walls (6,7) are provided with deformable means (10) and the at least two transverse walls (6,7) can be arranged at a mutual distance substantially corresponding to the dimension which is taken up, in the direction of a longitudinal row, by seats (2) in the passenger cabin (1), wherein the at least one transverse wall (6,7) connected, on one side with a longitudinal wall (12,13), in a direction of a longitudinal row and adapted to extend from the bottom to the ceiling (9) of the passenger cabin (1), and on the other side is connectable with a sidewall (11) of the passenger cabin (1) or a longitudinal wall (12,13), in a direction of a longitudinal row and adapted to extend from the bottom to the ceiling (9) of the passenger cabin (1), **characterized in that**
a longitudinal wall (12, 13) is assembled from at least two elements each having a width corresponding to a dimension which is taken up, in the direction of a longitudinal row, by one seat (2) or a plurality of seats of the passenger cabin (1).

2. A module (5) according to claim 1, **characterized in that** a longitudinal wall (12,13) is assembled from at least two elements, at least one of which has a dimension which can be set and adjusted at least in width direction.

3. A module (5) according to claim 1 or 2, **characterized in that** the deformable means (10) are resilient and/or comprise an inflatable hose.

4. A module (5) according to any of claim 1, 2 or 3, **characterized in that** the deformable means (10) are accommodated in a recess provided in a top or side edge of the respective wall.

5. A module (5) according to any of the preceding claims, wherein the deformable means (10) and/or the inflatable hose have been arranged such that the module (1) can be placed in airplane types which are mutually not entirely equally dimensioned.

6. A module (5) according to any one of the preceding claims, **characterized in that** at least one of the transverse and/or longitudinal walls (12,13) is, on the sides of the walls facing each other, at least partly provided with a resilient and/or sound-insulating wall or covering material.

7. A module (5) according to any one of the preceding claims, **characterized in that** at least one of the transverse and/or longitudinal walls (12,13) has a sandwich structure with a sound-insulating inner layer.

8. A module (5) according to any one of the preceding claims, **characterized in that** at least one wall (12,13) and/or door is provided with a window.

9. A module (5) according to any one of the preceding claims, **characterized in that** each door (7) is provided with a childproof latch.

10. A module (5) according to any of the previous claims, wherein a longitudinal wall (12,13) can be located adjacent an aisle (3).

11. A module (5) according to any one of the preceding claims, wherein a longitudinal wall (12,13) is directly connectable with one or a multiple set of seats (2) in a longitudinal row of, by preference, a middle part of the cabin.

12. A module (5) according to any one of the preceding claims, **characterized in that** at least one wall (6,7,12,13) of the module (1) is provided with supporting and bearing facilities for leisure facilities, such as a foldable sofa bed, a table top, a console, a washbasin, a climbing pole, a storage facility, a play structure, etc.

13. A module (5) according to any one of the preceding claims, wherein the leisure facilities are intended for children, and preferably comprise playing facilities, such as a climbing pole and/or a play structure.

14. A module (5) according to any one of the preceding claims, wherein at least one wall (6,7,12,13) of the module (1) is provided with a, preferably foldable, sofa bed and/or a table top, and/or wherein the floor is provided with a non-slip covering.

## Patentansprüche

1. Modul (5) zur Unterbringung in einer Passagierkabine (1) eines Transportmittels, insbesondere eines Flugzeugs, wobei die Passagierkabine (1) mit Sitzen (2) in Quer- und Längsreihen ausgestattet ist, bei welcher die Querreihen in Längsrichtung durch wenigstens einen Gang (3) durchtrennt sind, wobei das Modul (5) mit Wänden bereitgestellt wird, welche so angepasst sind, um sich aufwärts von einem Boden der Passagierkabine (1) aus zu erstrecken, und mit einem Zugang in der Form einer schließbaren Tür (7), welche mit einem Gang (3) verbindbar ist, wobei das Modul (5) wenigstens mit zwei Querwänden (6, 7) bereitgestellt wird, welche in Aufwärtsrichtung mit einer Decke (a) der Passagierkabine (1) verbindbar sind und welche mit den Längsreihen durch für diesen Zweck geeignete Mittel quer angebracht werden können, bei welchem die Wände (6, 7) zum Verbinden mit der Decke (a) und/oder den Seitenwänden mit deformierbaren Mitteln (10) bereitgestellt werden, und die wenigstens zwei Querwänden (6, 7) in einem beidseitigen Abstand angeordnet werden können, welcher im Wesentlichen der Ausdehnung entspricht, welche in Richtung einer Längsreihe durch Sitze (2) in der Passagierkabine (1) eingenommen wird, bei welchem die wenigstens eine Querwand (6,7) auf einer Seite in einer Richtung einer Längsreihe mit einer Längswand (12, 13) verbunden ist, und so angepasst ist, um sich vom Boden zur Decke (a) der Passagierkabine (1) zu erstrecken, und auf der anderen Seite mit einer Seitenwand (11) der Passagierkabine (1) oder einer Längswand (12, 13) in einer Richtung einer Längsreihe verbindbar ist, und so angepasst ist, um sich vom Boden zur Decke (a) der Passagierkabine (1) zu erstrecken, **dadurch gekennzeichnet, dass**
eine Längswand (12,13) aus wenigstens zwei Elementen zusammengebaut wird, wobei jedes eine Breite entsprechend einer Dimension aufweist, welche in die Richtung einer Längsreihe durch einen Sitz (2) oder eine Vielzahl von Sitzen der Passagierkabine (1) erforderlich ist.

2. Modul (5) nach Anspruch 1, **dadurch gekennzeichnet, dass** eine Längswand (12, 13) aus wenigstens zwei Stücken zusammengebaut wird, von denen wenigstens eines eine Dimension aufweist, welche wenigstens in Breitenrichtung eingestellt und angepasst werden kann.

3. Modul (5) nach Anspruch 1 oder 2, **dadurch gekennzeichnet, dass** die deformierbaren Mittel (10) elastisch sind, und/oder einen aufblasbaren Schlauch umfassen.

4. Modul (5) nach irgendeinem der Ansprüche 1, 2 oder 3, **dadurch gekennzeichnet, dass** die deformierbaren Mittel (10) in einer Aussparung bzw. Vertiefung untergebracht werden, welche in einer Ober- oder Seitenkante der entsprechenden Wand bereitgestellt wird.

5. Modul (5) nach irgendeinem der vorangegangenen Ansprüche, bei welchem die deformierbaren Mittel (10) und oder der aufblasbare Schlauch so angeordnet worden sind, dass das Modul (1) in Flugzeugtypen angeordnet werden kann, welche beidseitig nicht vollständig gleich dimensioniert sind.

6. Modul (5) nach irgendeinem der vorangegangenen Ansprüche, **dadurch gekennzeichnet, dass** wenigstens eine der Quer- und/oder Längswände (12,13) auf den Seiten der Wände, welche sich gegenüber liegen, wenigstens teilweise mit einer elastischen und/oder Schall isolierenden Wand oder abdeckendem Material bereitgestellt wird.

7. Modul (5) nach irgendeinem der vorangegangenen Ansprüche, **dadurch gekennzeichnet, dass** wenigstens eine der Quer- und/oder Längswände (12,13) eine Sandwich-Struktur mit einer Schall isolierenden, inneren Schicht aufweist.

8. Modul (5) nach irgendeinem der vorangegangenen Ansprüche, **dadurch gekennzeichnet, dass** wenigstens eine Wand (12, 13) und/oder Tür mit einem Fenster bereitgestellt wird.

9. Modul (5) nach irgendeinem der vorangegangenen Ansprüche, **dadurch gekennzeichnet, dass** jede Tür (7) mit einem kindersicheren Schloss bzw. Verriegelung bereitgestellt wird.

10. Modul (5) nach irgendeinem der vorangegangenen Ansprüche, bei welchem sich eine Längswand (12,13) an den Gang (3) angrenzend befinden kann,

11. Modul (5) nach irgendeinem der vorangegangenen Ansprüche, bei welchem eine Längswand (12, 13) mit einem oder mehreren Sets von Sitzen (2) in einer Längsreihe, von vorzugsweise einem mittleren Teil der Kabine, direkt befestigbar ist.

12. Modul (5) nach irgendeinem der vorangegangenen Ansprüche, **dadurch gekennzeichnet, dass** wenigstens eine Wand (6, 7, 12, 13) des Moduls (5) mit tragenden bzw. stützenden und lagernden Einrichtungen für Freizeit-Einrichtungen, wie zum Beispiel einem faltbaren Sofa-Bett, einer Tischplatte, einer Konsole, einem Waschbecken, einer Kletterstange, einer Ablage- bzw. Aufbewahrungsmöglichkeit, einer Wiedergabe- bzw. Spiel-Anordnung, etc., bereitgestellt wird.

13. Modul (5) nach irgendeinem der vorangegangenen Ansprüche, bei welchem die Freizeit-Möglichkeiten für Kinder beabsichtigt sind, und vorzugsweise Spiel-Möglichkeiten, wie zum Beispiel eine Kletterstange und/oder Wiedergabe- bzw. Spiel-Anordnung umfassen.

14. Modul (5) nach irgendeinem der vorangegangenen Ansprüche, bei welchem wenigstens eine Wand (6, 7, 12, 13) des Moduls (1) mit einem vorzugsweise faltbaren Sofa-Bett und/oder einer Tischplatte bereitgestellt wird, und/oder bei welchem der Boden mit einem rutschfesten Belag bereitgestellt wird.

## Revendications

1. Module (5) à placer dans une cabine de passagers (1) d'un moyen de transport, plus particulièrement un aéronef, laquelle cabine de passagers (1) est munie de sièges (2) en rangées transversales et longitudinales, dans lequel les rangées transversales sont traversées, en direction longitudinale, par au moins un couloir (3), lequel module (5) est muni de parois conçues pour s'étendre vers le haut à partir du plancher de la cabine de passagers (1) et avec un accès sous la forme d'une porte (7) pouvant être fermée pouvant communiquer avec un couloir (3), dans lequel le module (5) est au moins muni de deux parois transversales (6,7) qui peuvent être reliées dans la direction vers le haut à un plafond (9) de la cabine de passagers (1) et peuvent être fixées transversalement aux rangées longitudinales par des moyens appropriés à ce but, dans lequel pour relier le plafond (9) et/ou les parois latérales, les parois (6,7) sont munies de moyens déformables (10) et les deux parois transversales (6,7) peuvent être agencées à une distance mutuelle correspondant sensiblement à la dimension qui est prise, dans la direction d'une rangée longitudinale, par des sièges (2) dans la cabine de passagers (1), dans lequel la paroi transversale (6,7) est reliée, d'un côté à une paroi longitudinale (12,13), dans une direction d'une rangée longitudinale et conçue pour s'étendre du plancher au plafond (9) de la cabine de passagers (1), et, de l'autre côté, peut être relié à une paroi latérale (11) de la cabine de passagers (1) ou à une paroi longitudinale (12,13), dans une direction d'une rangée longitudinale et conçue pour s'étendre du plancher au plafond de la cabine de passagers (1),
**caractérisé en ce qu'**une paroi longitudinale (12,13) est assemblée à partir d'au moins deux éléments ayant chacun une largeur correspondant à une dimension qui est prise, dans la direction d'une rangée longitudinale, par un siège (2) ou une pluralité de sièges de la cabine de passagers (1).

2. Module (5) selon la revendication 1,
**caractérisé en ce qu'**une paroi longitudinale (12,13) est assemblée à partir d'au moins deux éléments, dont au moins un a une dimension qui peut être déterminée et réglée au moins dans la direction de la largeur.

3. Module (5) selon la revendication 1 ou 2,
**caractérisé en ce que** les moyens déformables (10) sont élastiques et/ou comprennent un tuyau gonflable.

4. Module (5) selon une quelconque revendication 1, 2 ou 3,
**caractérisé en ce que** les moyens déformables (10) sont logés dans un évidemment prévu dans un bord supérieur ou latéral de la paroi respective.

5. Module (5) selon une quelconque des revendications précédentes, dans lequel les moyens déformables (10) et/ou le tuyau gonflable ont été agencés de telle sorte que le module (5) puisse être placé dans des types d'aéronefs qui ne sont pas mutuellement dimensionnés de façon totalement identique.

6. Module (5) selon une quelconque des revendications précédentes,
**caractérisé en ce qu'**au moins l'une des parois transversales et/ou longitudinales (12,13) est, sur les côtés des parois se faisant face, au moins partiellement munie d'une matière de recouvrement ou paroi élastique et/ou à isolation phonique.

7. Module (5) selon une quelconque des revendications précédentes,
**caractérisé en ce qu'**au moins l'une des parois transversales et/ou longitudinale (12,13) présente une structure en sandwich avec une couche interne à isolation phonique.

8. Module (5) selon une quelconque des revendications précédentes,
**caractérisé en ce qu'**au moins une paroi (12,13) et/ou porte est équipée d'une fenêtre.

9. Module (5) selon une quelconque des revendications précédentes,
**caractérisé en ce que** chaque porte (7) est équipée d'un verrou à sécurité pour enfant.

10. Module (5) selon une quelconque des revendications précédentes, dans lequel une paroi longitudinale (12, 13) peut être située de façon adjacente à un couloir (3).

11. Module (5) selon une quelconque des revendications précédentes, dans lequel une paroi longitudinale (12,13) peut être directement reliée à un siège ou une série multiple de sièges (2) dans une rangée longitudinale, de préférence, d'une partie médiane de la cabine.

12. Module (5) selon une quelconque des revendications précédentes,
**caractérisé en ce qu'**au moins une paroi (6,7,12,13) du module (1) est équipée d'aménagements de support et d'appui pour des équipements de loisirs, tels qu'un canapé-lit pliant, un plateau de table, une console, un lavabo, un mât d'escalade, un aménagement de rangement, une structure de jeux, etc...

13. Module (5) selon une quelconque des revendications précédentes, dans lequel les équipements de loisirs sont destinés aux enfants, et comprennent de préférence des équipements de jeux, tels qu'un mât d'escalade et/ou une structure de jeux.

14. Module (5) selon une quelconque des revendications précédentes, dans lequel au moins une paroi (6,7,12,13) du module (5) est équipée d'un canapé-lit, de préférence pliant, et/ou d'un plateau de table et/ou dans lequel le plancher est équipé d'un revêtement anti-dérapant.
